(19) **Europäisches Patentamt European Patent Office Office européen des brevets**

(11) **EP 3 543 887 B1**

(12) # EUROPEAN PATENT SPECIFICATION

(45) Date of publication and mention of the grant of the patent:
**09.09.2020 Bulletin 2020/37**

(51) Int Cl.:
**G06F 21/57** (2013.01)  **H04L 29/08** (2006.01)
**G06F 8/65** (2018.01)  **H04L 9/32** (2006.01)
**G06Q 30/06** (2012.01)  **G06Q 20/10** (2012.01)
**G06Q 20/12** (2012.01)  **G06Q 20/34** (2012.01)
**G06Q 20/36** (2012.01)  **G07F 9/00** (2006.01)

(21) Application number: **19163458.3**

(22) Date of filing: **18.03.2019**

(54) **INCENTIVIZED DELIVERY NETWORK OF IOT SOFTWARE UPDATES BASED ON TRUSTLESS PROOF-OF-DISTRIBUTION**

ANREIZ FÜR DIE BEREITSTELLUNG VON IOT-SOFTWARE-AKTUALISIERUNGEN AUF BASIS VON UNZUVERLÄSSIGEM VERTRIEBSNACHWEIS

RÉSEAU DE DISTRIBUTION INCITATIF DE MISES À JOUR DE LOGICIEL D'IDO BASÉ SUR DES PREUVES DE DISTRIBUTION SANS FIDUCIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2018 US 201862644661 P**

(43) Date of publication of application:
**25.09.2019 Bulletin 2019/39**

(73) Proprietor: **Deutsche Telekom AG 53113 Bonn (DE)**

(72) Inventors:
- **LEIBA, Oded**
  **Asdod (IL)**
- **BITTON, Ron**
  **Yahud (IL)**
- **SHABTAI, Asaf**
  **Hulda (IL)**
- **ELOVICI, Yuval**
  **Moshav Arugot (IL)**
- **BRODT, Oleg**
  **Beer Sheva (IL)**
- **MIMRAN, David**
  **Tel Aviv (IL)**
- **NADLER, Asaf**
  **Hod Hashron (IL)**
- **YZHAK, Yechiav**
  **Kiryat Shmona (IL)**

(74) Representative: **Weickmann & Weickmann PartmbB Postfach 860 820 81635 München (DE)**

(56) References cited:
- **LEIBA ODED ET AL: "Incentivized Delivery Network of IoT Software Updates Based on Trustless Proof-of-Distribution", 2018 IEEE EUROPEAN SYMPOSIUM ON SECURITY AND PRIVACY WORKSHOPS (EUROS&PW), IEEE, 23 April 2018 (2018-04-23), pages 29-39, XP033373231, DOI: 10.1109/EUROSPW.2018.00011 [retrieved on 2018-07-06]**
- **LEE BOOHYUNG ET AL: "Blockchain-based secure firmware update for embedded devices in an Internet of Things environment", JOURNAL OF SUPERCOMPUTING, KLUWER ACADEMIC PUBLISHERS, DORDRECHT, NL, vol. 73, no. 3, 13 September 2016 (2016-09-13), pages 1152-1167, XP036185282, ISSN: 0920-8542, DOI: 10.1007/S11227-016-1870-0 [retrieved on 2016-09-13]**
- **MATTEO CAMPANELLI ET AL: "Zero-Knowledge Contingent Payments Revisited: Attacks and Payments for Services", IACR, INTERNATIONAL ASSOCIATION FOR CRYPTOLOGIC RESEARCH , vol. 20171101:190916 9 June 2017 (2017-06-09), pages 1-26, XP061023635, Retrieved from the Internet: URL:http://eprint.iacr.org/2017/566.pdf[retrieved on 2017-06-09]**

## Description

### Field of the Invention

The present invention relates to the field of Internet of Things. More particularly, the invention relates to a method for distributing software updates among IoT devices.

### Background of the Invention

The Internet of Things (IoT) network of connected devices currently contains more than 11 billion devices and is estimated to double in size within a few years. The massive growth in the number of connected devices, such as IoT devices, and particularly their essential need for security software and/or firmware upgrading (patching), has resulted in the search for reliable and trusted solutions for distributing software updates on a large scale.

The publication "Blockchain-based secure firmware update for embedded devices in an Internet of Things environment" by Lee Boohyung et al. is prior art.

Traditional software update services mainly rely on a client-server architecture, where bandwidth consumption and maintenance issues impose high costs and put security and availability at risk. IoT vendors that wish to provide software update services for their products are required to maintain large-scale data centers to support software distribution to millions of devices. The wide range of IoT devices (and firmware) also poses a challenge to the software update services commonly used for managing updates within organizations. Consequently, vendors delegate the task of updating software to the end users who are not always aware of security issues and the importance of keeping the devices updated.

Many IoT devices are therefore not consistently updated and remain vulnerable to known threats. When using a permissionless blockchain-based decentralized network instead of a private centralized vendor network, no incentive is provided for non-vendor nodes to host and deliver security updates. This presents limitations similar to those faced by centralized vendor networks. It is therefore desirable to have a method of delivering IoT software updates that overcomes the abovementioned limitations.

It is therefore an object of the present invention to provide a secure and scalable method for delivery of security updates to IoT devices.

It is another object of the present invention to provide a method for delivering IoT software updates that doesn't rely on client-server architecture.

It is another object of the present invention to provide a method for delivering IoT software updates that prevents IoT devices from not being updated consistently.

Other objects and advantages of the invention will become apparent as the description proceeds.

### Summary of the Invention

The present invention is defined by the appended independent claims 1 and 5.

A system for securely delivering, by one or more distributors, security updates from a vendor to one of more Internet Of Things (IoT) devices that are deployed by the vendor comprising a decentralized storage network (DSN) comprising at least one security update to be delivered to IoT devices, the DSN facilitating at least a vendor node, an IoT device node and a distributor node; and a blockchain (such as Ethereum) network, comprising at least one smart contract by which the vendor commits to payment in exchange for delivering security updates, the network facilitating at least a vendor node, an IoT device node and a distributor node.

The vendor releases a security update to the DSN allowing download of the update by the one or more distributors, and the vendor delegates to the one or more distributors the task of serving security updates to the one of more IoT devices by publishing a smart contract in the blockchain network through which the one or more distributors may be paid upon proving delivery of an update.

A method for a vendor to send an update file from to a group of IoT devices manufactured by the vendor via at least one distributor, comprising the steps of:

    a. hashing the update file;
    b. generating public proving/verification keys with a security parameter and a decision circuit;
    c. computing a wrapping package for the hashed update file;
    d. hashing the wrapping package;
    e. setting a time frame during which a distributor may be paid for distributing the update file; and
    f. posting a transaction on a blockchain network, the transaction deploying a smart contract that comprises a money deposit, the hashed update file wrapping package and a software program configured to transfer a portion of the deposited money within the time frame to the first distributor who provides proof that an IoT device has committed to receive the hashed update file.

A system for securely distributing, by one or more distributors, files/software objects from a vendor to one of more connected devices (such as IoT devices) that are deployed by the vendor, which comprises:

    a. a blockchain network comprising at least one security update to be delivered to connected devices, the blockchain network facilitating at least a vendor node, a connected device node and a distributor node; and
    b. a blockchain network comprising at least one smart contract by which the vendor commits to payment in exchange for delivering security updates, the network facilitating at least a vendor node, a connected device node and a distributor node;

wherein the vendor releases a security update to the blockchain network allowing download of the update by the one or more distributors, and the vendor delegates to the one or more distributors the task of serving security updates to the one of more connected devices by:

c. sending only part of each file/software object;
d. waiting for the confirmation from one of more connected devices;

sending, by the distributor the next part of the file/software object only after receiving the confirmation.

In one aspect, a distributor and an IoT object conducts a two-party protocol for performing fair exchange of the update file for a proof-of-distribution using a digital signature given by the IoT object which can reward the distributor with a payment, when sent to the smart contract.

fair exchange may be achieved in a trustless manner by applying a Zero-Knowledge Contingent Payment (ZKCP) using of a zero-knowledge proof generated by the distributor and verified by the IoT object.

## Brief Description of the Drawings

In the drawings:

- Fig. 1 schematically illustrates a system diagram for delivering security updates from vendors to IoT devices;
- Fig. 2 shows a flowchart of a protocol used by a vendor for sending an update file destined to a group of IoT devices;
- Fig. 3 shows a flowchart of a process that takes place upon receipt of a smart contract;
- Fig. 4 shows a flowchart of a two-party protocol conducted by a distributor and an IoT object in which they perform a fair exchange of the update file for a proof-of-distribution; and
- Fig. 5 shows a flowchart of a distributor collecting his reward after acquiring a proof-of-distribution.

## Detailed Description of the Invention

Reference will now be made to an embodiment of the present invention, examples of which are provided in the accompanying figures for purposes of illustration only. One skilled in the art will readily recognize from the following description that alternative embodiments of the structures and methods exemplified herein may be employed, *mutatis mutandis,* without departing from the principles of the invention.

A blockchain is a data structure that can be regarded as a public ledger where groups of messages are stacked one on top of the other. These groups of messages are named "blocks" and with the use of digital signatures and a distributed consensus algorithm, users can irreversibly agree with high probability on a specific order of the blocks in an asynchronous configuration (i.e., do not necessarily agree on time and order of messages).

Agreement on the order of blocks is useful for prevention of currency "double-spending" (where messages within the blocks correspond to money transactions) as the latter spending can be mutually eliminated by the users, and therefore is suitable to constitute the foundation for Bitcoin and various other cryptocurrencies.

Substantially, each transaction message within a block contains a coin's transfer value, the redeem terms, an input transaction and the signature of the transaction's author for authenticity. The redeeming terms can be referred to as a Boolean predicate, such that only a true evaluation can make use of the transaction. Because published transactions are a part of a block, they are irreversible and thus, redeeming terms can serve to vouch for coin in exchange for a truth assignment, which is the foundation of "smart contracts".

A smart contract is a protocol that enforces the negotiation or performance of an agreement. In the context of blockchain-based cryptocurrencies, a smart contract may be realized by a traceable and irreversible transaction that can be redeemed only if a set of terms are met. Essentially, smart contracts don't differ from other kinds of transaction and are primarily named likewise when used with redeeming terms that are more complex than verifying a receiver's identity. However, the contextual notion of being addressed to anyone who qualifies to specific terms instead of a specific address makes smart contracts valuable to nodes that wish to satisfy these terms and collect the value.

The features of blockchain-based smart contracts evolved from the Bitcoin scripting language from a simple, stack-based, and purposefully non-Turing-complete, to a new blockchain paradigm initiated with Ethereum (an open-source, public, blockchain-based distributed computing platform and operating system featuring smart contract (scripting) functionality), which offers Turing-complete stateful languages for writing smart contracts. The most widely adopted example of such language used for developing smart contracts in Ethereum is Solidity which is a JavaScript-like language. Rootstock is another example of a blockchain platform offering equivalent smart contract capabilities. Hereafter, the use of the term smart contracts refers to the Ethereum implementation.

Zero-Knowledge Succinct Non-Interactive ARguments of Knowledge (zk-SNARKs) is an efficient and secure system for proving and verifying zero-knowledge proofs. It allows a prover to (efficiently) convince a verifier that it possesses knowledge of a secret parameter, called a witness, satisfying certain properties, without revealing anything about the secret to the verifier or anyone else. For example, a prover can convince a verifier that it has knowledge of a secret w which is the hash preimage of some value *x*, without revealing anything about *w*. Because zk-SNARKS are *succinct,* proofs are very short and easy to verify. More formally, let *L* be an NP language and *C* be a decision circuit for *L*. A trusted party conducts a one-time setup phase that results in two public keys: approving key *pk* and a verification key *vk*. The proving key *pk* allows any (untrusted) prover to generate a proof $\pi$ attesting that $x \in L$ for an instance *x* of its choice. The non-interactive proof $\pi$ is both *zero-knowledge* and *proof-of-knowledge*. The proof $\pi$ has a constant size and can be verified in time that is linear in |*x*|.

A zk-SNARK for circuit satisfiability consists of the following three polynomial-time algorithms:

- *Gen* ($1^\lambda$, *C*)→(*pk, vk).* On security parameter $\lambda$ and a decision circuit *C, Gen* (i.e. generate) probabilistically samples *pk* and *vk*. Both keys are published as public parameters and can be used to prove/verify membership in $L_c$.
- *Prove* (*pk, x , w*)→$\pi$. On input proving key *pk,* instance *x* and witness for the NP-statement w, the *prover Prove* outputs a non-interactive proof $\pi$ for the statement $x \in Lc$.
- *Verify* (*vk, x , $\pi$*) → {0, 1} . On input verifying key *vk,* an instance *x,* and a proof $\pi$, the *verifier Verify* outputs 1 if $x \in L_c$.

Zero-Knowledge Contingent Payment (ZKCP) is a two-party protocol allowing the fair exchange of information for payment (e.g., cryptocurrency coins) in a setting where the two parties do not trust each other to deliver. Besides being private and secure in theory, it was practically used in Bitcoin with the use of zk-SNARKs (a fair exchange is a secure protocol to facilitate transactions over the Internet between players that do not trust each other. The main objective of these protocols is: either both the parties obtain each other's items or none do).

The framework proposed by the present invention allows vendors (i.e., manufacturers of IoT devices) a secure and scalable method for delivery of security updates to their deployed IoT devices. It is referred to as a framework because of its general requirements which allow a variety of implementations. The framework is comprised of two networks. The first is a Decentralized Storage Network (DSN), in which security updates are transferred between network nodes, and the second is a blockchain network in which vendors commit to payment in exchange for delivering in the form of smart contracts, thus incentivizing delivery within the DSN. Both of these networks are facilitated by three types of nodes that participate in the IoT updates delivery network (i.e. vendors, IoT devices and distributors). These nodes participate in both networks and interact with each other to support the paid-for delivery of updates.

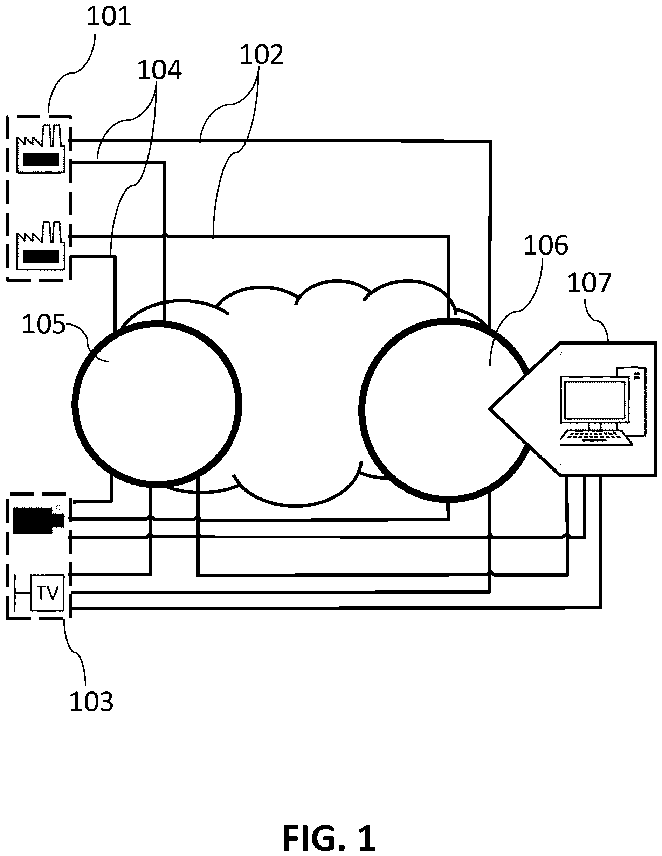

Fig. 1 schematically illustrates a system diagram of an implementation of a delivery process according to the proposed framework that is triggered when a vendor 101 releases a new security update (indicated at 102) that should be delivered to its deployed devices 103. The vendor delegates the task of serving security updates to its deployed IoT devices, by publishing a smart contract (indicated at 104) in a blockchain network 105, in which the vendor 101 commits to providing coins in exchange for a *proof-of-distribution,* i.e., providing a proof of delivering the update to a deployed device. Furthermore, vendors 101 host the new security update, enabling other nodes to consume via a DSN 106, for a limited and short period of time.

According to an embodiment of the invention, the smart contract is a software program comprising code that is suitable to verify that a distributor indeed performed a distribution and to transfer funds to the distributor upon verification. An exemplary implementation of such a software program comprises a constructor function configured to initialize the update distribution, a verification function configured to verify that an update has indeed been distributed, and a funds withdrawal function configured to transfer funds to a distributor.

Upon publication of the smart contract, a distributor 107 may engage by downloading update 102 from DSN 106, thus making it available for the IoT devices 103.

Devices 103 become aware of an update release with the publication of the smart contract and can now consume update 102 from distributors 107 over DSN 106. Update exchange between a deployed device 103 and a distributor 101 relies on a trustless swap in which the deployed device is updated and the distributor acquires a proof-of-distribution, thus paid by the smart contract.

DSN 106 is accessible by all nodes (peers) in the network (i.e. vendors 101, devices 103 and distributors 107). Accessibility can be achieved with a trackerless peer discovery scheme, using a Distributed Hash Table (DHT - a class of a decentralized distributed system that provides a lookup service similar to a hash table). The connected DSN nodes can both consume and serve files. A set *S* of DSN nodes $s_1 ... s_n$ is denoted as $S = \{s_1,..., s_{ns}\}$ . Regarding blockchain network 105, any interested party (e.g., an anonymous person, an organization, or a company) can read and post messages on the blockchain network. Furthermore, network 105 can be interpreted as a public ledger, in which each party has a currency balance. Finally the blockchain network supports smart contracts. A possible realization of our framework's required blockchain network 105 is Ethereum. The set *B* of blockchain network nodes $b_1 ... b_n$ is denoted as $B = \{b_1,..., b_{n_B}\}$.

Vendor nodes are host machines that are owned by manufacturers of IoT devices (e.g. 101 in Fig. 1). All vendor nodes participate in both the DSN and the blockchain networks. Within the blockchain network, vendor nodes are able to function as both a wallet and a network routing node. The set *V* of vendor nodes $v_1$ ...

$v_n$ is denoted as $V = \{v_1, ... v_{n_v}\}$, maintaining $V \subset S \wedge V \subset B$.

Each vendor node, $v_i$, maintains the following:

1. a master secret/public pair of keys ($sk^{v_i}, pk^{v_i}$); and
2. a list of its self-manufactured IoT devices public keys.

Each IoT device has a unique pair of keys. This can be realized like the vendor is "burning" a new secret key to each new manufactured IoT device and is adding the key to its list of keys.

IoT nodes are machines (e.g. 103) that require updates by their manufacturing vendor. All IoT nodes participate in both the DSN 106 and the blockchain 105 networks. Within the blockchain network 105, IoT nodes must be able to function as a network routing node. For every vendor $v_i \in V$, the set of its IoT nodes is denoted $O_i = o_{i1}, ..., o_{in}$, where $\forall i \in [1, m]: O_i \subset B \wedge O_i \subset S$.

Each IoT object, $o_{ik} \in O_i$, maintains a pair of secret/public keys ($sk^{o_{ik}}, pk^{o_{ik}}$) and a public key of its manufacturing vendor (i.e., $pk^{v_i}$). The latter can also be met by having the vendor "burn" its own public key, $pk^{v_i}$, into the IoT device. The requirements of IoT nodes can be realized efficiently in disk space and memory, especially given that IoT devices are often limited in these resources.

IoT nodes are not required to store a complete copy of the blockchain. Instead, they can rely on a trusted available blockchain node (e.g., a gateway), or reduce the trust needed by consisting of a light client such as in Ethereum. The purpose of the light client protocol is to allow light nodes to download only block headers as they appear, while fetching other parts of the blockchain on-demand, and ensuring that the data is correct, provided that the majority of miners are following the protocol correctly, and that at least one honest verifying full node exists and serves the accurate blockchain state.

An alternative memory efficient design could be supported by Non-Interactive Proofs of Proof-of-Work which could require only a soft-fork (a change to the bitcoin protocol wherein only previously valid blocks/transactions are made invalid) to existing blockchain protocols, and enable verification of a specific blockchain property, requiring only resources logarithmic in the length of the blockchain.

Furthermore, having the IoT function as a DSN node also does not impose significant space constraints. The IoT node is not required to share files in the network, and for cases in which of the distributed hash table is used (e.g., the Kademlia DHT that is used in BitTorrent) as the peer discovery scheme for DSN, only a small constant amount of memory is required for maintaining internal routing tables.

Distributor nodes (e.g. 107) are host machines that participate in an open bid for proofs-of-distribution. They participate both in the DSN and the blockchain-based networks, 106 and 105 respectively. Within the blockchain network, distributor nodes are able to function as both a wallet and a network routing node. Distributor nodes are denoted as $D_i = d_{i1}, ..., d_{in}$, where $D \subset S \wedge D \subset B$.

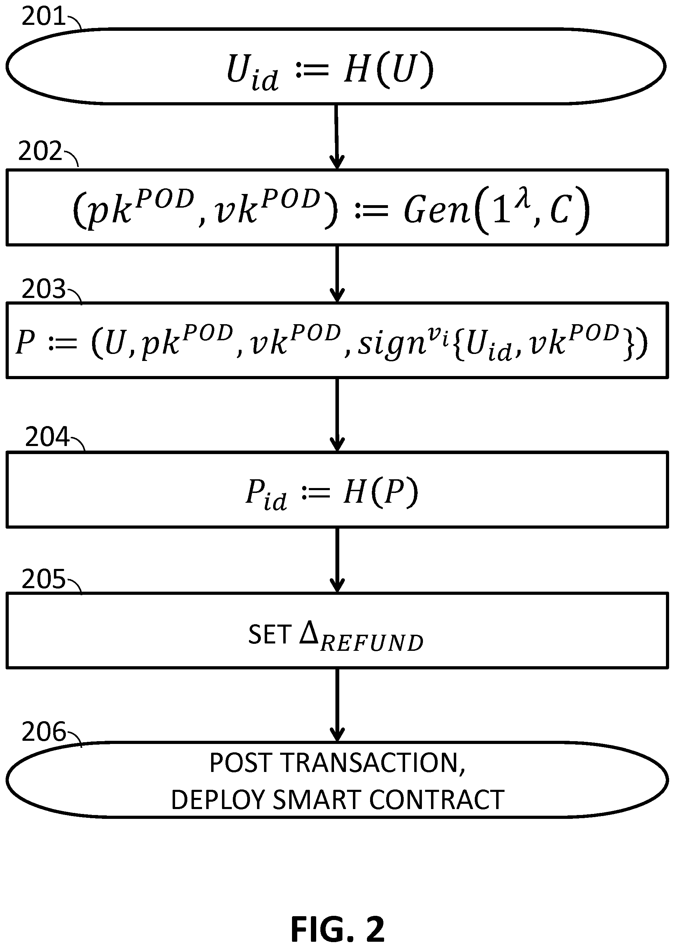

Fig. 2 shows a flowchart of a protocol used by a vendor $v_i \in V$ for sending an update file $U$ destined to a group of IoT objects manufactured by the vendor, $O_i = o_{i1},... , o_{in}$. Upon releasing a new update $U$, vendor $v_i$ performs the following phases: in the first stage 201 the update file is hashed, after which in stage 202 the vendor generates the zk-SNARKs public proving/verification keys, in which $\lambda$ is a security parameter, and $C$ is a decision circuit. In the next stage 203 the vendor computes an update file wrapping package P, after which $P_{id}$ is hashed by the vendor in stage 204. In the next stage 205 the vendor sets a $\Delta_{REFUND}$ to an acceptable time duration for a patch to be effective. This stage allows a vendor to collect refunds if some of the IoT devices were not served after a set time (e.g., because sufficient time has passed such that a newer update file is to be distributed, or because some remote objects are no longer active). In the next and final stage 206 the vendor posts a transaction to the underlying blockchain network which deploys a smart contract comprising a deposit $f_{v_i}$ of money, the hash of the update file wrapping package $P_{id}$, and a software program, which essentially says:

*for each object $o_{ik} \in O_i$:*

$$transfer \;\; \frac{f_{v_i}}{n} \;\; coins \; to \; the \; first \; party \; who \; provides \; proof$$

*that $o_{ik}$ have committed to receive the hash preimage of $U_{id}$, within time $\Delta_{REFUND}$.*

It is noted that addressing the specific IoT devices for any security update becomes possible as the vendor maintains the list of their public keys.

Routinely, distributor nodes (denoted D) and the manufactured IoT objects (denoted $O_i$) watch the blockchain for an indication that a relevant smart contract is deployed by a vendor known by its public key $pk^{v_i}$. This is achievable, for example, by having the distributors and IoT objects watch a single "factory contract", in which upon receipt of a message with the variable arguments, will create a new instance of the child contract, and trigger an event with the public key of the bidding vendor and the address of the newly created contract.

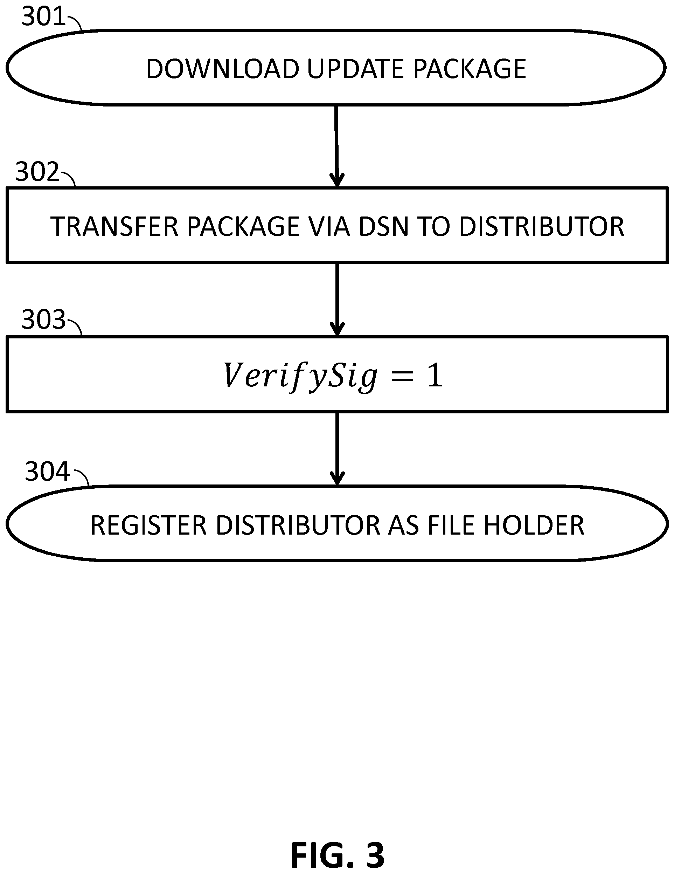

Fig. 3 shows a flowchart of the process that takes place upon receipt of the smart contract. In the first stage 301 the distributors begin to request to download the update file wrapper package, corresponding to the hash $P_{id}$ that was published in the smart contract, using the underlying DSN. In the next stage 302 the vendor $v_i$ transfers (i.e., seeds) the package P via the DSN (off the blockchain). The file is then propagated until it eventually reaches some distributor $d \in D$ that wishes to participate in the open bid for the proofs-of-distribution. According to an embodiment, the initial seeding by the vendor lasts a limited amount of time until a sufficient mass of distributors has downloaded the file, and form that point the distribution is expected to be performed completely by the competing distributors.

After completely downloading the package *P*, *d* verifies, in stage 303, that *VerifySig* $(pk^{vi}, sign^{vi}\{U_{id}, vk^{POD}\}, U_{id}||vk^{POD}) = 1$. In the next stage 304 *d* registers itself in the underlying DSN peer discovery scheme, such as a distributed hash table (DHT), as a holder of the file *U* using its file hash $U_{id}$.

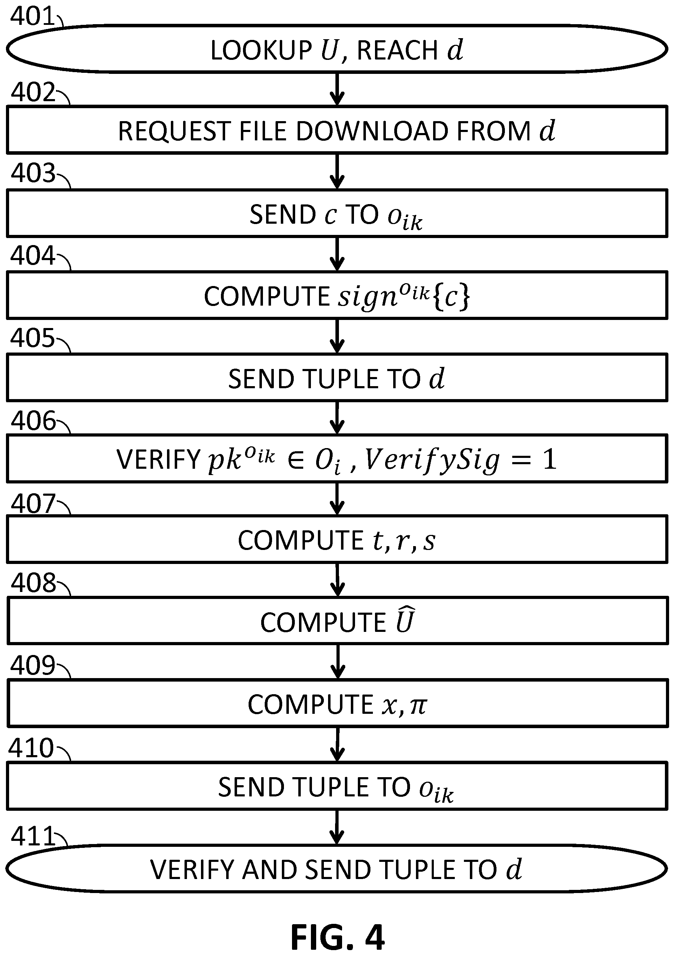

Next, a distributor and an IoT object conduct a two-party protocol, in which they perform a fair exchange of the update file for a proof-of-distribution, a digital signature given by the IoT object which can reward the distributor with a payment when sent to the smart contract. According to an embodiment, the fair exchange is achieved in a trustless manner by applying a Zero-Knowledge Contingent Payment (ZKCP), which makes use of a zero-knowledge proof generated by the distributor and verified by the IoT object. This part may be performed in a protocol which is external to the blockchain and therefore does not require any specific modifications to the scripting language of the underlying blockchain nor does it add any burden to the blockchain nodes (so it does not cost any digital currency fees or *gas* in the Ethereum jargon). Fig. 4 shows a flowchart of an embodiment of this process.

In the first stage 401 IoT object $o_{ik} \in O_i$ performs a lookup for the file *U* using the publicly available file hash $h_U$ from the smart contract deployed by the vendor $v_i$, and reaches the distributor *d* by using the underlying DSN peer-discovery scheme (e.g. DHT). In the next stage 402 $o_i$ sends *d* a request to download the update file which is the hash preimage of $U_{id}$. In the next stage 403 *d* sends a challenge *c* to $o_{ik}$ to sign on. In the next stage 404 $o_{ik}$ computes $sign^{o_{ik}}\{c\}$ and sends, in stage 405, the tuple $(pk^{o_{ik}}, sign^{o_{ik}}\{c\})$ to *d*. In the next stage 406 *d* verifies that $pk^{o_{ik}} \in O_i$ and that $VerifySig(pk^{o_{ik}}, sign^{o_{ik}}\{c\}, c) = 1$. In the next stage 407 *d* computes $t := Gen(1^\lambda)$, $r := H(pk^d||t)$ and $s := H(r)$, where *Gen* is a secure random key generator for the security parameter $\lambda$. In the next stage 409 *d* computes $\hat{U} := Enc(U, r)$, where *Enc* is a symmetric encryption algorithm, for instance AES. In the next stage 410 *d* computes $x := (\hat{U}, s)$, and the zero-knowledge proof $\pi := Prove(pk^{POD}, x, r)$ for the NP statement $\exists r$ s. t. $H(r) = s \wedge H(Dec(\hat{U}, r)) = U_{id}$. In the next stage 412 *d* sends the tuple $(x, \pi, vk^{POD}, sign^{vi}\{U_{id}, vk^{POD}\})$ to the IoT device $o_{ik}$. In the next stage 413 $o_{id}$ verifies that $VerifySig(pk^{vi}, sign^{vi}\{U_{id}, vk^{POD}\}, U_{id}||vk^{POD}) = 1$ and that $Verify(vk^{POD}, x, \pi) = 1$, after which $o_{ik}$ send the tuple $(sign^{o_{ik}}\{U_{id}, s\})$ to *d*.

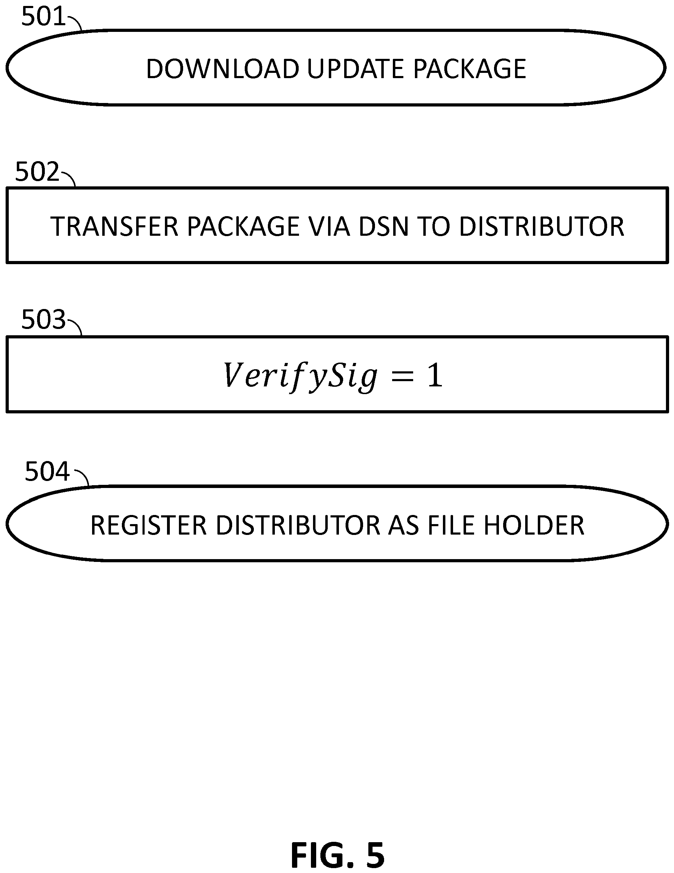

As a distributor *d* acquires the proof-of-distribution, he collects his reward according to the flowchart shown in Fig. 5. In the first stage 501 *d* verifies that $VerifySig(pk^{o_{ik}}, sign^{o_{ik}}\{U_{id}, s\}, U_{id}||s) = 1$, after which in stage 502 *d* posts a redeem transaction to the smart contract containing $(pk^{o_{ik}}, t, s, pk^d, sign^{o_{ik}}\{U_{id}, s\}, r)$, which would release $\frac{f_{vi}}{n}$ coins to $pk^d$ in returns, according to the contract description. In the next stage 503 $o_{ik}$ watches the blockchain nodes for a relevant event which is associated with the device's public key, $pk^{o_{ik}}$, with the associated decrypting key *r*. Finally in stage 504 $o_{ik}$ computes $Dec(\hat{U}, r)$ to get the update *U*.

## Security

As mentioned above, the proposed framework encourages distributor nodes to participate in the protocol by delivering security updates to IoT devices in exchange for payment compensation. Therefore, a secure implementation of the system includes the guarantee for a fair exchange; i.e., regardless of a trust setting, every distributor node that delivers an update to a device is compensated correctly.

Considering a case in which an attacker can read, send and drop any transaction sent to the blockchain or any other network packet. In addition, the attacker can be a passive party eavesdropping on the network packets, or it can be active by injecting, replaying, or filtering any message to anyone of the parties involved. An exemplary attacker model is the Dolev and Yao attacker model. Based on this attack model (Dolev, D.; Yao, A. C. (1983), "On the security of public key protocols", IEEE Transactions on Information Theory), several threats to the system are considered.

**Denial-of-service (DoS):** An attacker can target a vendor by preventing legitimate transactions from appearing on the ledger, thus preventing the vendor from posting a new software update. This kind of attack is typically referred to as a censorship attack. By construction, the attacker will need to control the majority of the mining power of the network, which is presumably difficult.

An alternative DoS attack is preventing a vendor from uploading new software update to the distributors' network, or preventing an IoT device from downloading new software from the distributor. These attacks are mitigated using the multiple independent access points provided by the decentralized storage network. Using a decentralized peer-discovery scheme, such as a distributed hash table (DHT), further allows fault tolerance and reduces single points of failure. Furthermore, an attacker could prevent the connection from the IoT device to the blockchain network, thus preventing the device from being notified about new software updates. However, the various access points given by the blockchain network assist in mitigating this threat.

**Compromising software integrity.** An attacker can impersonate a vendor and try to publish a malicious software update to the IoT devices. The integrity of the firmware update is ensured by the ability of the IoT device to verify the received file *U* by its hash $U_{id}$ specified in the contract. The contract was created by the vendor in a transaction signed by him and verified against his known public key.

**Software downgrade attack.** An attacker may cause an IoT device to downgrade its software to an outdated version (which may include known vulnerabilities). This threat is mitigated using the consensus regarding the order of the blockchain's transactions, which implies ordering of the updates versions.

Proof of Fair Exchange

Let $U_{ij}$ be the jth update of the vendor $v_i$. It can be proved that except for a negligible probability in the security parameter $\lambda$, a distributer node $d_q$ can receive the payment compensation $C(U_{ij}, o_{ik})$ if and only if:

1. $d_q$ delivered the security update $U_{ij}$ to the IoT device $o_{ik}$, and
2. No other distributor $d_p$ ($p = q$) received $C(U_{ij}, o_{ik})$.

This assertion is proved as follows: Let $SC_{ij}$ be the smart contract published by the vendor $v_i$ towards the delivery and compensation of the update $U_{ij}$. The contract $SC_{ij}$ contains the set of IoT devices $O_i$, with their proofs-of-distribution (if received). By the contract construction, for every $r_x$, a successful proof-of-distribution for the update $U_{ij}$ and device $o_{ix}$, the object $o_{ix}$ is assigned with $r_x$ only if it was not previously assigned. For any distributor $d_p$ ($p \neq q$) to receive $C(U_{ij}, o_{ik})$ prior to $d_q$, a published transaction reporting the proof-of-distribution $d_p$ is required for $U_{ij}$, $o_{ik}$. If this transaction is indeed published, $O_i$ already has an $r$ assignment for $o_{ik}$, thus a distributor node $d_q$ cannot receive $C(U_{ij}, o_{ik})$ as required. We therefore, continue by assuming $C(U_{ij}, o_{ik})$ was not yet received by any distributor.

Assuming $C(U_{ij}, o_{ik})$ is still available, in order for $d_q$ to receive it - the smart contract $SC_{ij}$ must induce $verify(\cdot) = 1$. Therefore, if $d_q$ did not deliver the security update $U_{ij}$ to the IoT device $o_{ik}$ it is required to provide the contract with a forged published proof and yet suffice $verify(\cdot) = 1$. Based on the security parameter of the system $\lambda$, a distributor $d_q$ can forge this proof only if:

1. The distributor forges $o_{ik}$'s digital signature; i.e., $d_q$ forges $sign^{o_{ik}}\{U_{id}, s, pk^d\}$;
2. The distributor forges the entire zk-SNARKs' proof-of-knowledge; and
3. The distributor uses the proof-of-distribution of another distributor, $d_{q'}$, as his own, i.e. $d_q$ manages to find a hash preimage $t'$ s.t $H(pk^{d_q} || t') = H(pk^{d_{q'}} || t) = r$

Based on their definitions and the use of the $\lambda$ parameter in the protocol, digital signatures, zk-SNARKs and hash preimages are unforgeable except with negligible probability in $\lambda$. Therefore, $d_q$ cannot receive $C(U_{ij}, o_{ik})$ without a proof-of-distribution except with a negligible probability in $\lambda$.

In the other direction, by the completeness of zk-SNARKs, a distributor $d_q$ that delivers $U_{ij}$ to the IoT device $o_{ik}$ will be able to acquire a proof-of-distribution and can publish it to collect $C(U_{ij}, o_{ik})$, assuming that the IoT object will not disconnect in the middle of their two-party protocol. If no other distributor collected $C(U_{ij}, o_{ik})$, based on the irreversibility of the blockchain, the smart contract is binding, thus $d_q$ will be able to receive the $C(U_{ij}, o_{ik})$ payment as required.

It should be noted that the vendor $v_i$, who performed the zk-SNARKs setup to generate the proving and verification keys, can theoretically forge proofs to falsely convince IoT devices that he has delivered them the update file. However, since this will serve him only in getting his own vested funds from the smart contract, and beat his own original purpose to update his manufactured devices, it is argued that this is not a real limitation of the protocol.

## Claims

1. A system for securely delivering, by one or more distributors, security updates from a vendor to one of more connected devices that are deployed by the vendor , wherein the connected devices are IoT devices, comprising:

   a. a decentralized storage network, DSN, comprising at least one security update to be delivered to connected devices, said DSN is configured to facilitate vendor nodes, connected device/IoT nodes and distributor nodes;
   b. a blockchain network comprising at least one smart contract by which the vendor commits to payment in exchange for delivering security updates, the blockchain network facilitating vendor nodes, connected device/IoT nodes and distributor nodes being host machines that are configured to participate in an open bid for providing proofs-of- distribution; wherein
   c. all of said vendor nodes are configured to participate in both the DSN and the blockchain networks;
   d. each vendor node is configured to maintain a master secret/public pair of keys and a list of its self-manufactured IoT devices' oublie keys;
   e. the vendor is configured to release a security update to the DSN to allow download of the security update by said one or more distributors and to delegate, to said one or more distributors, the task of serving the security update to said one of more connected devices by publishing a smart contract in said blockchain network through which said one or more distributors may be paid upon proving delivery of the security update;
   f. said connected device/IoT nodes being adapted to function as network routing nodes within said blockchain network; and

g. said smart contract being a software program configured to verify that a distributor of said one or more distributors indeed performed a distribution and to transfer funds to the distributor upon verification by a verification function configured to verify that the security update has been distributed to said one of more connected devices.

2. A system according to claim 1, wherein the blockchain network is Ethereum.

3. A system according to claim 1, wherein a distributor of the one or more distributors and an IoT object, representing a connected device of the one of more connected devices, are configured to conduct a two-party protocol for performing a Fair exchange of an update file for a proof-of-distribution using a digital signature given by said IoT object which can reward the distributor with a payment, when sent to the smart contract.

4. A system according to claim 3, wherein the fair exchange is achieved in a trustless manner through a Zero-Knowledge Contingent Payment, ZKCP, using a zero-knowledge proof generated by the distributor and verified by the IoT object.

5. A method for a vendor to send an update file to a group of connected devices manufactured by the vendor via one or more distributors, wherein the connected devices are IoT devices, comprising:

    a. establishing a decentralized storage network, DSN, comprising at least one security update to be delivered to the group of connected devices, wherein said DSN is facilitating vendor nodes, connected device/IoT nodes and distributor nodes;
    b. hashing the update file;
    c. generating public proving/verification keys with a security parameter and a decision circuit;
    d. computing a wrapping package for the hashed update file;
    e. hashing said wrapping package;
    f. setting a time frame during which a distributor may be paid for distributing the update file; and
    g. posting a transaction on a blockchain network, the transaction deploying a smart contract that comprises a money deposit, the hashed wrapping package and a software program for transferring a portion of the deposited money within said time frame to a distributor of said one or more distributors who first provides proof that a connected device of the group of connected devices nas committed to receive the hashed update file, wherein

h. all of said vendor nodes are participating n both the DSN and the blockchain networks;
i. each vendor node maintains a master secret/public pair of keys and a list of its self-manufactured IoT devices public keys;
j. the vendor releases a security update to the DSN allowing download of the security update by said one or more distributors and delegates, to said one or more distributors, the task of serving the security update to said group of connected devices by publishing a smart contract in said blockchain network through which said one or more distributors may be paid upon proving delivery of the security update ;
k. said connected device/IoT nodes are functioning as network routing nodes within said blockchain network; and
l. said smart contract being a software program for verifying that a distributor of said one or more distributors indeed performed a distribution and for transferring Funds to the distributor upon verifying by a verification function that the security update has been distributed to a connected device of the group of connected devices.

**Patentansprüche**

1. System zum sicheren Liefern, durch einen oder mehrere Distributoren, von Sicherheitsaktualisierungen von einem Anbieter zu einer oder mehreren angeschlossenen Vorrichtungen, die von dem Anbieter bereitgestellt werden, wobei die angeschlossenen Vorrichtungen IoT-Vorrichtungen sind, wobei es aufweist:

    a. ein dezentralisiertes Speichernetzwerk, DSN, das zumindest eine Sicherheitsaktualisierung aufweist, die zu den angeschlossenen Vorrichtungen zu liefern ist, wobei das DSN konfiguriert ist, um Anbieterknoten, angeschlossene-Vorrichtung/IoT-Knoten und Verteilerknoten zu unterstützen;
    b. ein Blockchain-Netzwerk, das zumindest einen intelligenten Vertrag aufweist, durch den der Anbieter im Austausch zum Liefern von Sicherheitsaktualisierungen eine Zahlung vornimmt, wobei das Blockchain-Netzwerk Anbieterknoten, angeschlossene-Vorrichtung/IoT-Knoten und Verteilerknoten unterstützt, welche Hostmaschinen sind, die konfiguriert sind, um in einer offenen Ausschreibung zum Liefern von Vertriebsnachweisen zu partizipieren; wobei
    c. alle der Anbieterknoten konfiguriert sind, um sowohl in dem DSN-Netzwerk als auch dem Blockchain-Netzwerk zu partizipieren;
    d. jeder Anbieterknoten konfiguriert ist, um ein geheimes/öffentliches Paar von Masterschlüsseln sowie eine Liste seiner selbsthergestellten öffentlichen IoT-Vorrichtungs-Schlüssel zu halten;

e. der Anbieter konfiguriert ist, um eine Sicherheitsaktualisierung zu dem DSN auszugeben und um ein Herunterladen der Sicherheitsaktualisierung durch den einen oder die mehreren Verteiler zu erlauben und um an den einen oder die mehreren Verteiler die Aufgabe zu delegieren, die Sicherheitsaktualisierung der einen oder den mehreren angeschlossenen Vorrichtungen anzubieten, durch Veröffentlichung eines intelligenten Vertrags in dem Blockchain-Netzwerk, durch den der eine oder die mehreren Verteiler bei Nachweis der Lieferung der Sicherheitsaktualisierung bezahlt werden können;

f. die angeschlossene-Vorrichtung/IoT-Knoten dazu ausgelegt sind, als Netzwerk-Routing-Knoten innerhalb des Blockchain-Netzwerks zu fungieren; und

g. der intelligente Vertrag ein Software-Programm ist, das konfiguriert ist, um zu verifizieren, dass ein Verteiler des einen oder der mehreren Verteiler tatsächlich eine Verteilung durchgeführt hat, und um Geldmittel an den Verteiler zu überweisen, bei Verifizierung durch eine Verifizierungsfunktion, die konfiguriert ist, um zu verifizieren, dass die Sicherheitsaktualisierung zu der einen oder den mehreren angeschlossenen Vorrichtungen verteilt worden ist.

2. System nach Anspruch 1, wobei das Blockchain-Netzwerk Ethereum ist.

3. System nach Anspruch 1, wobei ein Verteiler des einen oder der mehreren Verteiler und eines IoT-Objekts, das eine angeschlossene Vorrichtung der einen von mehreren angeschlossenen Vorrichtungen repräsentiert, konfiguriert sind, um ein Zwei-Parteien-Protokoll zur Durchführung eines fairen Austauschs einer Aktualisierungsdatei für einen Verteilungsnachweis mittels einer von dem IoT-Objekt gegebenen digitalen Signatur auszuführen, die dem Verteiler eine Zahlung vergüten kann, wenn sie zu dem intelligenten Vertrag geschickt wird.

4. System nach Anspruch 3, wobei der faire Austausch durch Zero Knowledge Contingent Payment, ZKCP, mittels eines Nullkenntnis-Nachweises, der von dem Verteiler erzeugt wird und von dem IoT-Objekt verifiziert wird, unzuverlässig erzielt wird.

5. Verfahren für einen Anbieter, um eine Aktualisierungsdatei zu einer Gruppe angeschlossener Vorrichtungen, die von dem Anbieter hergestellt wurden, über einen oder mehrere Verteiler zu versenden, wobei die angeschlossenen Vorrichtungen IoT-Vorrichtungen sind, wobei es aufweist:

a. Erstellen eines dezentralisierten Speichernetzwerks, DSN, das zumindest eine Sicherheitsaktualisierung aufweist, die zu der Gruppe von angeschlossenen Vorrichtungen zu liefern ist, wobei das DSN Anbieterknoten, angeschlossene-Vorrichtung/IoT-Knoten und Verteilerknoten unterstützt;

b. Hash-en der Aktualisierungsdatei;

c. Generieren von öffentlichen Nachweis/Verifizierungsschlüsseln mit einem Sicherheitsparameter und einem Entscheidungskreis;

d. Berechnen einer Hüllpackung für die gehashte Aktualisierungsdatei;

e. Hash-en der Hüllpackung;

f. Setzen eines Zeitrahmens, während dem ein Verteiler für das Verteilen der Aktualisierungsdatei bezahlt werden kann; und

g. Posten einer Transaktion auf einem Blockchain-Netzwerk, wobei die Transaktion einen intelligenten Vertrag bereitstellt, der ein Geldkonto aufweist, der gehashten Hüllpackung und eines Software-Programms zum Überweisen eines Teils des hinterlegten Gelds innerhalb des Zeitrahmens zu einem Verteiler des einen oder der mehreren Verteiler, der zuerst einen Nachweis liefert, dass eine angeschlossene Vorrichtung der Gruppe von angeschlossenen Vorrichtungen verpflichtet wurde, um die gehashte Aktualisierungsdatei zu empfangen,

wobei

h. alle der Anbieterknoten in sowohl dem DSN-Netzwerk als auch dem Blockchain-Netzwerk teilnehmen;

i. jeder Anbieterknoten ein geheimes/öffentliches Paar von Masterschlüsseln sowie eine Liste seiner selbst hergestellten öffentlichen IoT-Vorrichtungs-Schlüssel hält;

j. der Anbieter eine Sicherheitsaktualisierung zu dem DSN ausgibt, die ein Herunterladen der Sicherheitsaktualisierung durch den einen oder mehrere Verteiler erlaubt, und an den einen oder die mehreren Verteiler die Aufgabe delegiert, die Sicherheitsaktualisierung der Gruppe von angeschlossenen Vorrichtungen anzubieten, durch Veröffentlichung eines intelligenten Vertrags in dem Blockchain-Netzwerk, durch den der eine oder die mehreren Verteiler bei Nachweis einer Lieferung der Sicherheitsaktualisierung bezahlt werden können;

k. die angeschlossene-Vorrichtung/IoT-Knoten als Netzwerk-Routing-Knoten innerhalb des Blockchain-Netzwerks fungieren;

l. der intelligente Vertrag ein Software-Programm ist, das konfiguriert ist, um zu verifizieren, dass ein Verteiler des einen oder der mehreren Verteiler tatsächlich eine Verteilung durchgeführt hat, und um Geldmittel an den Verteiler zu überweisen, bei Verifizierung durch eine Verifizierungsfunktion, dass die Sicherheitsaktualisierung zu einer angeschlossenen Vorrichtung der Gruppe von angeschlossenen Vorrichtungen verteilt worden ist.

## Revendications

1. Système pour remettre de manière sécurisée, par le biais d'un ou plusieurs distributeurs, des mises à jour de sécurité d'un fournisseur à un parmi plusieurs dispositifs connectés qui sont déployés par le fournisseur, dans lequel les dispositifs connectés sont des dispositifs IoT, comprenant :

   a. un réseau de stockage décentralisé, DSN, comprenant au moins une mise à jour de sécurité à remettre à des dispositifs connectés, dans lequel ledit réseau DSN est configuré de manière à faciliter des nœuds de fournisseurs, des nœuds de dispositifs connectés/IoT et des nœuds de distributeurs ;
   b. un réseau à chaîne de blocs comprenant au moins un contrat intelligent par lequel le fournisseur s'engage à effectuer un paiement en échange de la remise de mises à jour de sécurité, le réseau à chaîne de blocs facilitant des nœuds de fournisseurs, des nœuds de dispositifs connectés/IoT et des nœuds de distributeurs correspondant à des machines hôtes qui sont configurées de manière à prendre part à un appel d'offres ouvert pour fournir des preuves de distribution ; dans lequel
   c. tous lesdits nœuds de fournisseurs sont configurés de manière à prendre part à la fois au réseau DSN et aux réseaux à chaînes de blocs ;
   d. chaque nœud de fournisseur est configuré de manière à maintenir une paire de clés secrète/publique maîtresses et une liste de ces clés publiques de dispositifs IoT fabriquées en interne ;
   e. le fournisseur est configuré de manière à publier une mise à jour de sécurité sur le réseau DSN afin de permettre le téléchargement de la mise à jour de sécurité par ledit un ou lesdits plusieurs distributeurs, et à déléguer, audit un ou auxdits plusieurs distributeurs, la tâche de desservir la mise à jour de sécurité audit un parmi plusieurs dispositifs connectés, en publiant un contrat intelligent dans ledit réseau à chaînes de blocs à travers lequel ledit ou lesdits plusieurs distributeurs peuvent être payés en apportant la preuve de la remise de la mise à jour de sécurité ;
   f. lesdits nœuds de dispositifs connectés/IoT étant aptes à fonctionner en qualité de nœuds de routage de réseau dans ledit réseau à chaîne de blocs ; et

   g. ledit contrat intelligent étant un programme logiciel configuré de manière à vérifier qu'un distributeur parmi ledit un ou lesdits plusieurs distributeurs a effectivement mis en œuvre une distribution, et à transférer des fonds au distributeur, après vérification par une fonction de vérification configurée de manière à vérifier que la mise à jour de sécurité a été distribuée audit un parmi plusieurs dispositifs connectés.

2. Système selon la revendication 1, dans lequel le réseau à chaîne de blocs est Ethereum.

3. Système selon la revendication 1, dans lequel un distributeur parmi ledit un ou lesdits plusieurs distributeurs, et un objet IoT, représentant un dispositif connecté parmi ledit un parmi plusieurs dispositifs connectés, sont configurés de manière à mettre en œuvre un protocole bipartite pour mettre en œuvre un échange équitable d'un fichier de mise à jour contre une preuve de distribution, en utilisant une signature numérique donnée par ledit objet IoT en mesure de récompenser le distributeur par un paiement, lorsqu'il est envoyé au contrat intelligent.

4. Système selon la revendication 3, dans lequel l'échange équitable est réalisé d'une manière sans confiance par le biais d'un paiement conditionnel sans connaissance, dit « Zéro Knowledge Contingent Payment », ZKCP, en utilisant une preuve à divulgation nulle de connaissance générée par le distributeur et vérifiée par l'objet IoT.

5. Procédé permettant à un fournisseur d'envoyer un fichier de mise à jour à un groupe de dispositifs connectés fabriqués par le fournisseur, par l'intermédiaire d'un ou plusieurs distributeurs, dans lequel les dispositifs connectés sont des dispositifs IoT, le procédé comprenant les étapes ci-dessous consistant à :

   a. établir un réseau de stockage décentralisé, DSN, comprenant au moins une mise à jour de sécurité à remettre au groupe de dispositifs connectés, dans lequel ledit réseau DSN facilite des nœuds de fournisseurs, des nœuds de dispositifs connectés/IoT et des nœuds de distributeurs ;
   b. hacher le fichier de mise à jour ;
   c. générer de clés de preuve/vérification publiques avec un paramètre de sécurité et un circuit de décision ;
   d. calculer un paquet d'emballage pour le fichier de mise à jour haché ;
   e. hacher ledit paquet d'emballage ;
   f. définir un délai pendant lequel un distributeur peut être payé pour la distribution du fichier de mise à jour ; et

g. publier une transaction sur un réseau à chaîne de blocs, la transaction déployant un contrat intelligent qui comprend un dépôt d'argent, le paquet d'emballage haché et un programme logiciel pour transférer une partie de l'argent déposé dans ledit délai, à un distributeur parmi ledit ou lesdits plusieurs distributeurs qui fournit en premier lieu la preuve qu'un dispositif connecté du groupe de dispositifs connectés s'est engagé à recevoir le fichier de mise à jour haché ; dans lequel

h. tous lesdits nœuds de fournisseurs prennent part à la fois au réseau DSN et aux réseaux à chaînes de blocs ;

i. chaque nœud de fournisseur maintient une paire de clés secrète/publique maîtresses et une liste de ces clés publiques de dispositifs IoT fabriquées en interne ;

j. le fournisseur publie une mise à jour de sécurité sur le réseau DSN permettant le téléchargement de la mise à jour de sécurité par ledit un ou lesdits plusieurs distributeurs, et délègue, audit un ou auxdits plusieurs distributeurs, la tâche de desservir la mise à jour de sécurité audit groupe de dispositifs connectés en publiant un contrat intelligent dans ledit réseau à chaînes de blocs par le biais duquel ledit un ou lesdits plusieurs distributeurs peuvent être payés après avoir apporté la preuve de la remise de la mise à jour de sécurité ;

k. lesdits nœuds de dispositifs connectés/IoT fonctionnent en qualité de nœuds de routage de réseau au sein dudit réseau à chaîne de blocs ; et

l. ledit contrat intelligent étant un programme logiciel permettant de vérifier qu'un distributeur parmi ledit un ou lesdits plusieurs distributeurs a effectivement mis en œuvre une distribution, et de transférer des fonds au distributeur, après vérification, par une fonction de vérification, que la mise à jour de sécurité a été distribuée à un dispositif connecté du groupe de dispositifs connectés.

**FIG. 1**

201 $$U_{id} := H(U)$$

202 $$\left(pk^{POD}, vk^{POD}\right) := Gen\left(1^{\lambda}, C\right)$$

203 $$P := \left(U, pk^{POD}, vk^{POD}, sign^{v_i}\{U_{id}, vk^{POD}\}\right)$$

204 $$P_{id} := H(P)$$

205 SET $\Delta_{REFUND}$

206 POST TRANSACTION,
DEPLOY SMART CONTRACT

**FIG. 2**

301

DOWNLOAD UPDATE PACKAGE

302

TRANSFER PACKAGE VIA DSN TO DISTRIBUTOR

303

$$VerifySig = 1$$

304

REGISTER DISTRIBUTOR AS FILE HOLDER

**FIG. 3**

401 LOOKUP $U$, REACH $d$

402 REQUEST FILE DOWNLOAD FROM $d$

403 SEND $c$ TO $o_{ik}$

404 COMPUTE $sign^{o_{ik}}\{c\}$

405 SEND TUPLE TO $d$

406 VERIFY $pk^{o_{ik}} \in O_i$, $VerifySig = 1$

407 COMPUTE $t, r, s$

408 COMPUTE $\widehat{U}$

409 COMPUTE $x, \pi$

410 SEND TUPLE TO $o_{ik}$

411 VERIFY AND SEND TUPLE TO $d$

**FIG. 4**

501
DOWNLOAD UPDATE PACKAGE

502
TRANSFER PACKAGE VIA DSN TO DISTRIBUTOR

503
$$VerifySig = 1$$

504
REGISTER DISTRIBUTOR AS FILE HOLDER

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DOLEV, D. ; YAO, A. C.** On the security of public key protocols. *IEEE Transactions on Information Theory,* 1983